# FASCICULE DE BREVET EUROPEEN

(11) **EP 0 813 951 B1**
(45) Date de publication et mention de la délivrance du brevet: **04.09.2002**
(21) Numéro de dépôt: 97109650.8
(22) Date de dépôt: 13.06.1997
(51) Int. Cl.: B29D 30/26

(54) **Anneau de transfert d'une enveloppe de pneumatique ou d'une ceinture d'enveloppe de pneumatique**
Übertragungsring für Luftreifen oder für Luftreifengürtel
Transfer ring for a pneumatic tyre or for a tyre belt

(30) Priorité: 19.06.1996 FR 9607721
(43) Date de publication de la demande: 29.12.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Morteyrol, Jean-Louis, 63118 Cebazat (FR)
(74) Mandataire: Dequire, Philippe Jean-Marie Denis

(56) Documents cités:
- EP-A- 0 104 338
- EP-A- 0 613 767
- DE-A- 2 109 564
- FR-A- 2 292 579
- GB-A- 2 092 100
- US-A- 4 608 219

## Description

L'invention concerne un anneau de transfert pour machine d'assemblage d'enveloppes de pneumatiques.

Dans l'industrie pneumatique, il est courant de réaliser une carcasse d'enveloppe de pneumatique incluant essentiellement l'ensemble de l'enveloppe de pneumatique à l'exception des renforts annulaires extérieurs et de la bande de roulement qui forment une ceinture à positionner précisément sur ladite carcasse. Celle-ci est fabriquée séparément, en effet, du fait de sa géométrie et de son positionnement sur la surface annulaire extérieure de la carcasse, il est préférable de saisir la ceinture, pour la transférer, par sa surface annulaire extérieure. A cette fin, on utilise généralement un anneau de transfert muni de moyens de préhension de la circonférence extérieure de la ceinture, cet anneau de transfert pouvant également permettre de déplacer ensuite l'enveloppe de pneumatique complète réalisée.

Cette opération de transfert a une grande importance dans la fabrication de l'enveloppe pneumatique. En effet, les pneumatiques doivent être équilibrés, ce qui implique un positionnement précis des constituants de l'enveloppe, d'une part uniformément sur la circonférence de cette dernière et, d'autre part symétriquement par rapport au plan médian radial de l'enveloppe. De plus, la faible rigidité de l'anneau constitué par la ceinture à l'état cru nécessite un transfert précautionneux afin de ne pas risquer de le déformer lors de sa prise.

La publication EP-A-0 700 774 décrit un anneau de transfert d'une ceinture d'enveloppe de pneumatique, constituée par deux disques annulaires coaxiaux dont l'un, intérieur, est fixe et l'autre, extérieur, est mobile en rotation autour de l'axe de l'anneau. Cet anneau de transfert comporte des préhenseurs reliés respectivement à chacun des disques par une biellette, de sorte que la rotation du disque extérieur entraîne un déplacement radial des préhenseurs afin de prendre la ceinture, ladite rotation étant réalisée grâce à un vérin situé radialement à l'extérieur du disque extérieur.

Un tel anneau de transfert permet de saisir des ceintures de différents diamètres. Cependant, cette caractéristique s'accompagne d'un encombrement radial très important. Or il est courant que les anneaux de transfert, lors de la pose de la ceinture, doivent se positionner entre le support portant la carcasse et un appareil de rouletage, utilisé pour réaliser une bonne application de la ceinture sur la carcasse.

Ceci limite considérablement l'encombrement radial extérieur admissible pour l'anneau de transfert.

La publication US-4 667 574 décrit un anneau de transfert d'une ceinture d'enveloppe de pneumatique selon le préambule de la revendication 1, comportant des préhenseurs déplaçables radialement afin de saisir la ceinture, et commandés respectivement par un vérin pneumatique d'actionnement. Chaque vérin commande, par l'intermédiaire d'un piston logé dans le corps du préhenseur concerné, le déplacement radial dudit préhenseur jusqu'à une position de butée du piston correspondant à la définition du diamètre de la ceinture à saisir.

Un tel anneau de transfert ne peut donc être que monodimensionnel. De plus, les vérins utilisés pour cet anneau exerçant une pression relativement importante sur la ceinture lors de son transfert, risquent de provoquer des déformations de ladite ceinture.

Par ailleurs, dans les deux documents précités, les anneaux de transfert présentés nécessitent un réglage très précis de coaxialité par rapport à la forme portant initialement la ceinture et au support d'assemblage où elle va être posée. En effet, pour permettre une prise correcte de la ceinture, le diamètre défini par la position des préhenseurs doit être parfaitement centré sur ladite ceinture.

La publication GB-A-2 092 100 se distingue de la publication US-4 667 574, citée précédemment, par le fait que le déplacement des préhenseurs est stoppé par un dispositif de blocage de la tige du piston dans une direction perpendiculaire au déplacement radial de ladite tige. Ce dispositif permet d'autoriser un déplacement indépendant de chaque préhenseur, cependant il nécessite non seulement des vérins à tige encombrants mais également la présence de dispositifs de blocage (14) qui augmentent encore l'encombrement radial. Le caractère multidimensionnel d'un tel anneau de transfert est donc limité à de très faibles différences de diamètres. De plus, comme signalé pour le dispositif présenté dans la publication US-4 667 574, la pression de fonctionnement du type de vérins utilisés pour cet anneau est problématique.

L'invention a pour objet un anneau de transfert d'une ceinture d'enveloppe de pneumatique ou d'une enveloppe de pneumatique, multidimensionnel et respectant un faible encombrement radial.

Selon l'invention, l'anneau de transfert d'une enveloppe de pneumatique ou d'une ceinture d'enveloppe de pneumatique, comportant des préhenseurs répartis le long de sa circonférence, déplaçables radialement pour entrer en contact avec ladite enveloppe ou ceinture, et comportant des moyens pour commander le déplacement radial desdits préhenseurs et des moyens d'immobilisation des préhenseurs par blocage de ces derniers perpendiculairement à leur déplacement radial, est caractérisé en ce que les moyens d'immobilisation agissent directement sur les préhenseurs.

De tels moyens d'immobilisation sont donc indépendants des préhenseurs, et n'agissent pas comme des butées. Ils permettent un blocage des préhenseurs quelle que soit leur position radiale, sans encombrement radial supplémentaire.

Selon une mise en oeuvre particulière de l'invention, les moyens d'immobilisation comprennent des éléments de serrage des préhenseurs, répartis en deux jeux circonférentiels, latéralement de part et d'autre des préhenseurs, les éléments des deux jeux se faisant face. Chaque élément de serrage est déplaçable vers un préhenseur perpendiculairement au déplacement radial de ce dernier. Avantageusement ces éléments de serrage sont constitués par des plaques de serrage.

Cette disposition assure aux préhenseurs une bonne stabilité et rigidité en position.

Dans le but de, notamment, permettre une certaine souplesse de réglage du positionnement de l'anneau de transfert au sein de la machine d'assemblage et de limiter les risques de déformation de la ceinture ou de l'enveloppe à saisir, chaque préhenseur possède un moyen d'actionnement propre autorisant un déplacement radial de course quelconque indépendamment pour chaque préhenseur.

Avantageusement, des moyens de guidage des préhenseurs sont disposés latéralement par rapport auxdits préhenseurs. Ceci contribue à la compacité de l'anneau de transfert, en préservant le faible encombrement radial.

D'autres caractéristiques et avantages de l'invention apparaîtront à la lecture d'un exemple de réalisation d'un anneau de transfert conforme à l'invention, en référence aux dessins dans lesquels :
- la figure 1 est une représentation schématique de la disposition d'un anneau de transfert au sein d'une machine d'assemblage,
- la figure 2 est une perspective schématique de l'anneau de transfert représenté à la figure 1,
- la figure 3 est une vue partielle de dessus, d'un préhenseur de l'anneau de transfert représenté sur la figure 2,
- la figure 4 est une coupe partielle de l'anneau de transfert selon les flèches IV de la figure 3,
- la figure 5 est une coupe partielle du préhenseur représenté à la figure 3, selon les flèches V, en position déployée dudit préhenseur,
- la figure 6 est une coupe partielle comparable à celle de la figure 5, si ce n'est la position du préhenseur qui est celle de repos,
- la figure 7 est une coupe partielle de l'anneau de transfert selon les flèches VII de la figure 4.

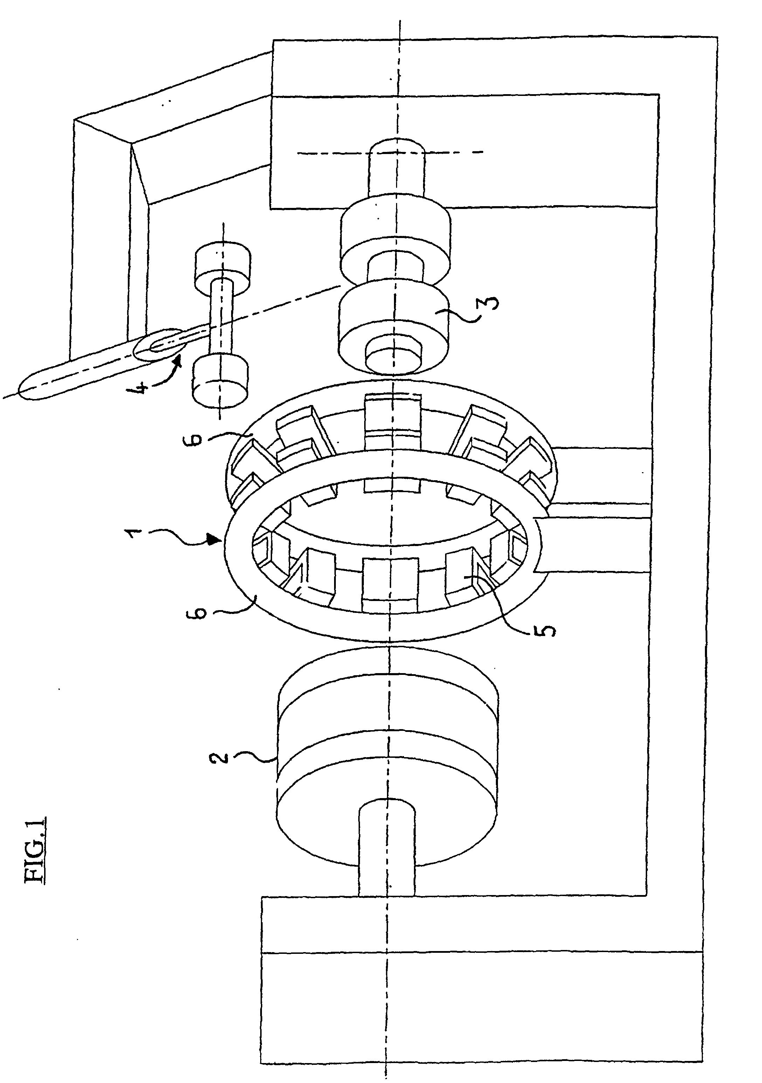

Selon la figure 1, l'anneau de transfert 1 fait partie d'une machine d'assemblage comportant une forme annulaire 2, dégonflable, sur laquelle est confectionnée la ceinture d'enveloppe de pneumatique, réglée pour être coaxiale à un tambour 3 sur lequel est positionnée la carcasse qui doit recevoir la ceinture. Ce tambour 3 est surmonté d'un appareil de rouletage 4 permettant, une fois la ceinture en place sur la carcasse, d'appliquer correctement les bords de ladite ceinture sur celle-ci.

Entre le tambour 3 et la forme 2, est monté à coulissement sur des rails situés au sol, non représentés, l'anneau de transfert 1 qui, tout en ayant un diamètre intérieur supérieur à la forme 2 afin de réaliser la prise de la ceinture, doit posséder un diamètre extérieur assez petit pour passer entre le tambour 3 et l'appareil de rouletage 4.

L'anneau de transfert 1 comporte des secteurs jointifs, chacun desquels portant un préhenseur 5. De préférence l'anneau de transfert 1 comporte dix secteurs afin de réaliser une bonne prise de la ceinture sans nécessité de trop nombreux préhenseurs. Mais, bien entendu, on pourrait tout à fait envisager un anneau de transfert conforme à l'invention comportant un nombre de secteurs différents.

Ainsi l'anneau de transfert dispose de dix préhenseurs 5 répartis régulièrement le long de sa circonférence.

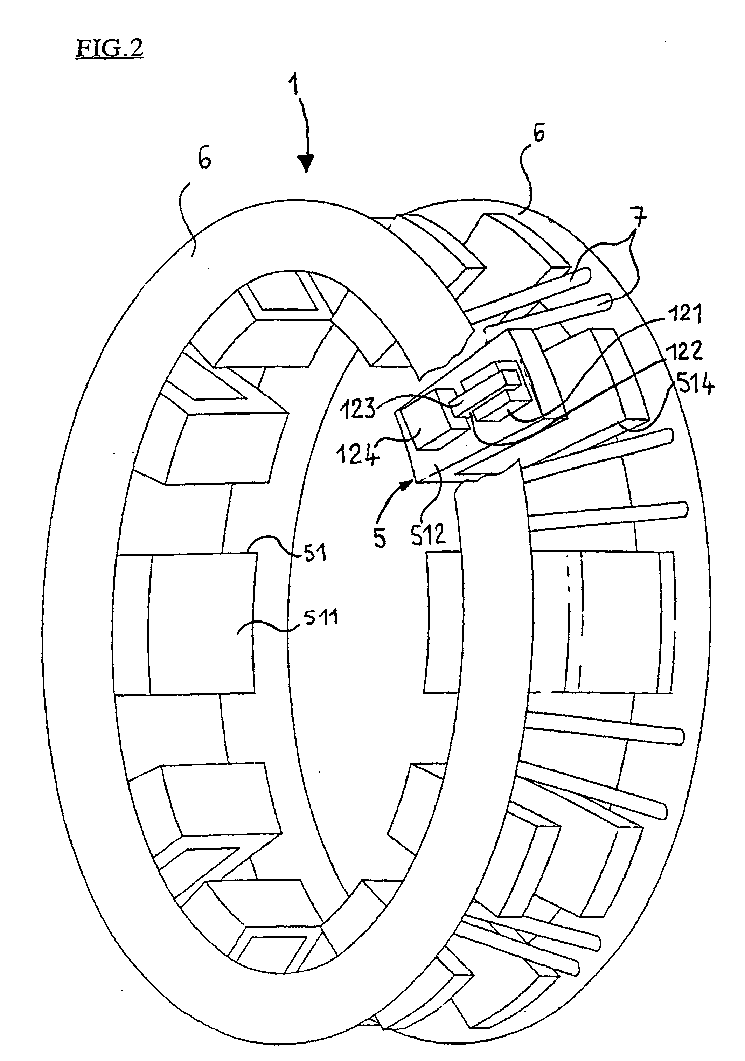

Comme le montre la figure 2, l'anneau de transfert 1 comprend deux disques 6 annulaires, coaxiaux, identiques et parallèles, qui constituent sa structure de base. Ces disques 6 définissent les parois latérales de l'anneau et sont solidarisés l'un à l'autre par des tiges de jonction 7 espacées régulièrement sur la circonférence des disques 6, chacune des extrémités d'une tige étant fixée à l'un des disques. Pour des raisons de symétrie, chaque secteur comporte deux tiges de jonction 7 de sorte que les tiges de jonction sont espacées régulièrement le long de la périphérie de l'anneau 1.

On notera que la perspective schématique de la figure 2 ne représente pas l'intégralité des éléments constitutifs de l'anneau de transfert 1 afin de ne pas être surchargée.

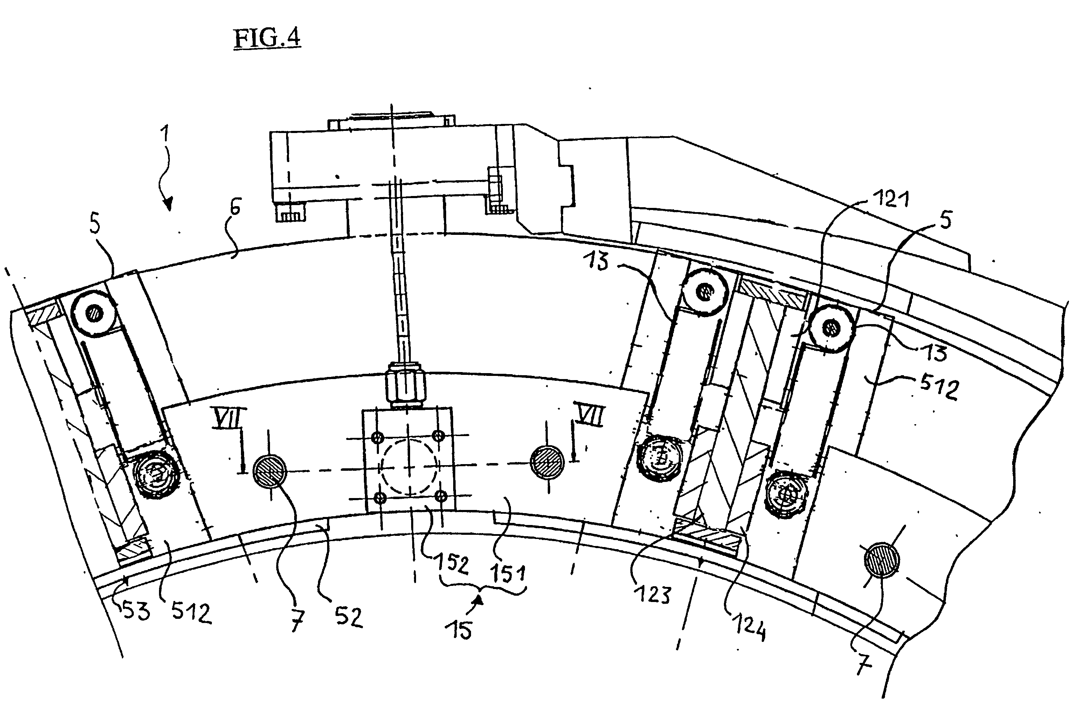

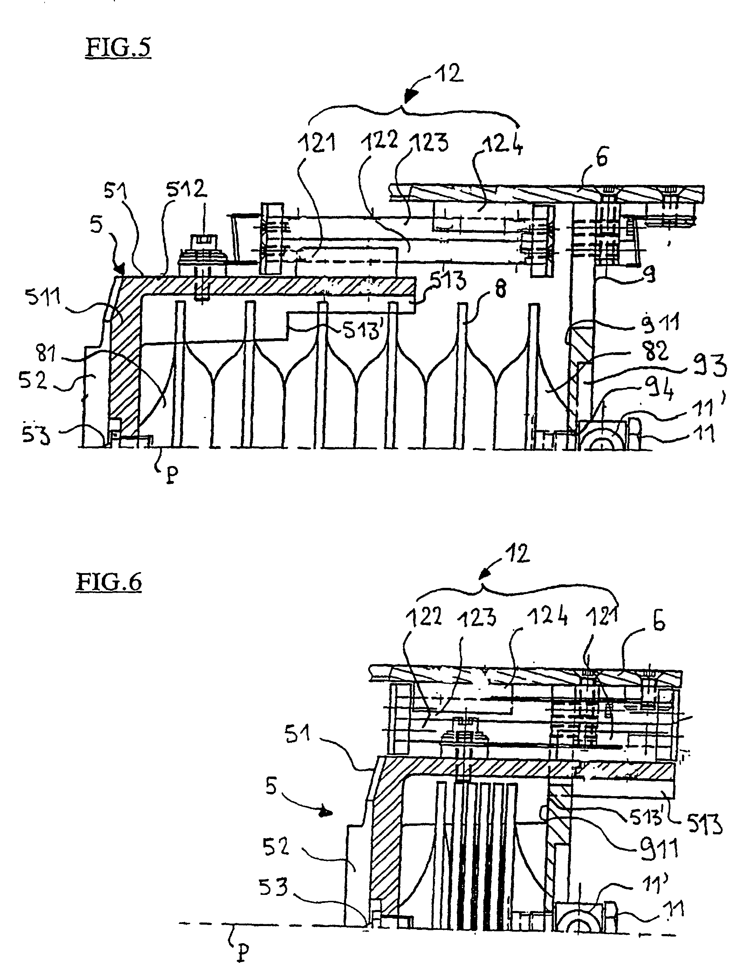

La figure 5 ne présente qu'une coupe partielle d'un préhenseur 5, ce dernier étant symétrique par rapport au plan P. On voit que les préhenseurs 5 sont constitués par un corps creux 51, ayant l'allure d'un boîtier en forme de U ouvert vers l'extérieur de l'anneau de transfert 1, possédant :
- une paroi de fond 511 rectangulaire, portant extérieurement un élément de prise 52 de la ceinture ayant une forme concave afin d'épouser celle de ladite ceinture et d'obtenir une plus grande surface de contact, comme représenté à la figure 4. On peut éventuellement prévoir en son centre un pic 53 fin de très faible longueur afin de contribuer à la prise;
- et des parois latérales opposées 512 et 514 parallèles aux disques 6 de l'anneau de transfert 1, leurs bords latéraux respectifs étant prolongés par des rebords 513, 515 perpendiculaires auxdites parois.

Les préhenseurs 5 sont montés sur les disques 6 respectivement par l'intermédiaire d'un flasque fixe 9 relié au corps 51 par un vérin d'actionnement 8 dont une extrémité 81 est fixée à la face intérieure de la paroi de fond 511 et dont l'autre extrémité 82 est fixée au flasque 9. Le corps 51 peut ainsi être déplacé radialement par rapport au flasque fixe 9 grâce au vérin d'actionnement 8.

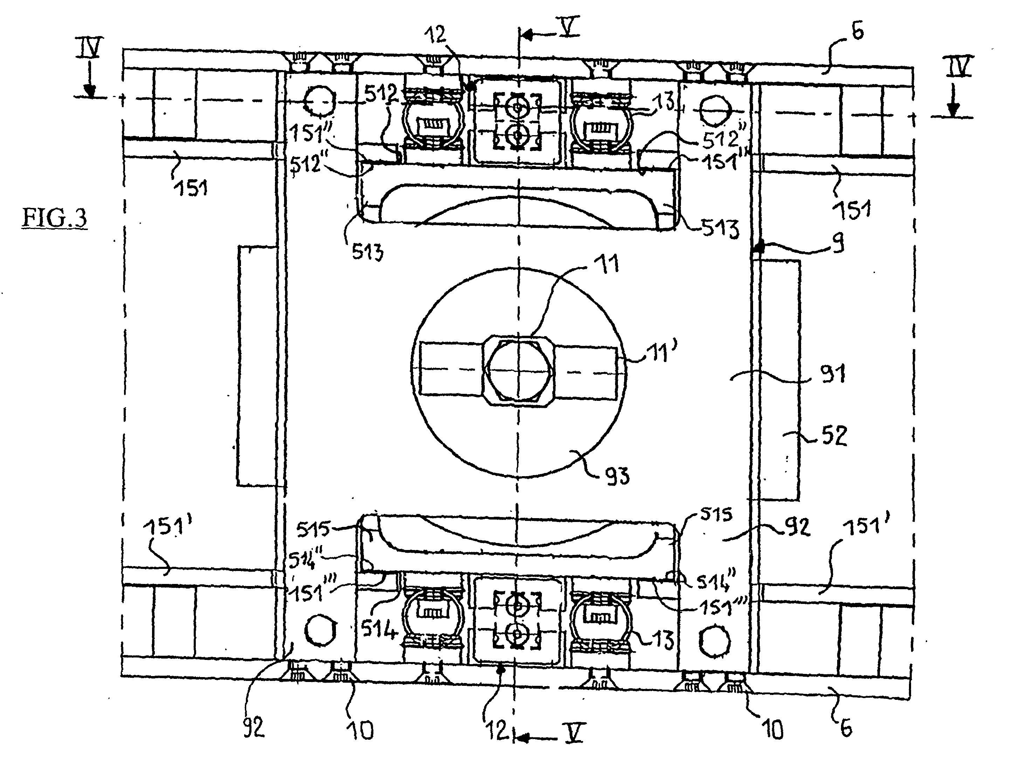

Comme le montrent les figures 3 et 5, le flasque 9 comporte une zone centrale de forme sensiblement rectangulaire 91, dont les extrémités sont prolongées par des pattes 92 de liaison avec les disques 6 grâce à des vis 10. La zone 91 porte en son centre un évidement 93 percé d'un trou 94 de passage d'un moyen 11 de fixation de l'extrémité 82 du vérin d'actionnement 8 sur la face 911 du flasque 9, intérieure au préhenseur et d'alimentation en air dudit vérin grâce à l'ouverture 11'.

Chacun des rebords 513 et 515 porte, par ailleurs, un épaulement portant la référence 513' pour le rebord 513, l'épaulement du rebord 515 n'étant pas visible sur les figures. Ces épaulements coopèrent, en position de repos des préhenseurs 5, avec la zone 91 afin de limiter la course de ces derniers vers l'extérieur de l'anneau 1.

Les vérins d'actionnement 8 sont alimentés en air par des tuyaux non représentés branchés respectivement sur les ouvertures 11', qui sont tous reliés à une même source d'alimentation. Afin que la montée des vérins en pression soit uniforme, on pourra par exemple utiliser plusieurs sources d'alimentation disposées le long de la circonférence de l'anneau.

Chaque préhenseur 5 est ainsi monté entre les deux disques 6. De plus, chaque préhenseur est relié à ces disques 6 par l'intermédiaire de moyens de guidage 12, décrit dans la suite de la description, assurant le suivi de la trajectoire de déplacement desdits préhenseurs.
Ces actionnement et déplacement individuels de chaque préhenseur 5, donnent à ces préhenseurs la possibilité d'adopter une position radiale légèrement différente les uns des autres lors de la prise de la ceinture et du maintien de celle-ci. En effet, au moment de l'étape de prise de la ceinture, l'avancement de chaque préhenseur 5 est stoppé par son contact avec la ceinture, celle-ci étant maintenue, à ce stade, radialement par sa forme de fabrication 2.

Cette caractéristique permet de s'accommoder d'un défaut de coaxialité entre l'anneau de transfert 1 et l'ensemble forme 2 - tambour 3. Ce qui signifie que la précision de ce réglage de coaxialité entre l'anneau de transfert 1 et l'ensemble forme 2 d'une part - tambour 3 d'autre part, peut être moins grande que la précision nécessaire du réglage entre la forme 2 et le tambour 3. Cet aspect est d'autant plus avantageux que, comme on l'a vu précédemment, l'anneau de transfert 1 est mobile en translation, ce qui peut se traduire par l'apparition d'écarts par rapport au réglage initial au bout d'un certain nombre de déplacements. On pourra donc ici tolérer ces écarts jusqu'à une certaine limite, ce qui permettra de limiter le nombre de réglage à effectuer et de faciliter leur mise au point.

Selon la figure 5, les moyens de guidage 12 sont montés pour chaque préhenseur 5, symétriquement et extérieurement par rapport audit préhenseur sur chacune de ses parois latérales 512 et 514. Les moyens de guidage 12 correspondant aux deux parois 512 et 514 des préhenseurs, étant identiques on ne décrira ces moyens que pour l'une de ces parois.

Les moyens de guidage 12 liés à la paroi latérale 512, sont constitués par deux rails 122 et 123 accolés par leur paroi de fond respective, à l'intérieur desquels coulissent respectivement un premier patin 121 fixé rigidement sur la paroi 512 et un second patin 124 fixé rigidement sur le disque 6 proche de ladite paroi, ces fixations étant réalisées par des vis non représentées. La paroi latérale 512 coulisse donc le long d'un des disques 6. Il en est de même simultanément pour la paroi latérale 514 le long de l'autre disque 6, permettant ainsi le guidage du corps 51 du préhenseur 5.

Cet agencement permet au corps 51 d'avoir une course correspondant à la somme de la course de chacun des patins, donc un encombrement radial très limité par rapport à la course obtenue.

Chacune des parois 512, 514 porte également au moins un ressort de rappel 13 vers sa position de repos, comme le montre la figure 3.

Afin de réaliser un anneau multidimensionnel acceptant des diamètres variant jusqu'à une centaine de millimètres entre le minima et le maxima, en ayant toujours le souci d'un faible encombrement, il est intéressant d'utiliser des vérins à soufflet qui permettent d'obtenir une course beaucoup plus importante qu'un vérin pneumatique classique pour un encombrement initial au repos équivalent. De plus, de tels vérins fonctionnent à des pressions inférieures au bar, ce qui évite les risques de déformation sur la ceinture, même par pincement entre les préhenseurs 5 et la forme 2, dus à une trop forte pression des préhenseurs sur ladite ceinture.

Conformément à un aspect de l'invention, l'anneau 1 de transfert comporte des moyens de blocage des préhenseurs quelle que soit la position d'avancement radial de ces derniers, sans augmenter l'encombrement radial de l'anneau de transfert.

L'anneau de transfert 1, conforme à l'invention, comporte de tels moyens d'immobilisation radiale 15 des préhenseurs 5. Ces moyens d'immobilisation 15 réalisent un blocage des préhenseurs 5 perpendiculairement à leur déplacement radial, qui permet d'obtenir une réalisation multidimensionnelle (ou acceptant plusieurs dimensions) et compacte à la fois.

Comme le montrent les figures 3 et 4, les moyens d'immobilisation 15 comprennent des éléments de serrage 151, 151' tels que des plaques. Ces plaques de serrage 151, 151' sont réparties en deux jeux circonférentiels, parallèlement aux disques 6, de part et d'autre des préhenseurs 5, les plaques 151 du premier jeu faisant face aux plaques 151' du second jeu.

Une variante de réalisation de l'invention consistant en ce que les plaques de serrage soient réparties, perpendiculairement aux disques 6, de part et d'autre des préhenseurs 5, peut également être envisagée bien qu'elle soit plus complexe à réaliser.
Dans cette variante, il faut également que le déplacement des plaques vers les préhenseurs soit perpendiculaire au déplacement radial de ces derniers.

Ici, le jeu circonférentiel de plaques de serrage 151 est donc situé entre la paroi latérale 512 et le disque 6 qui lui est le plus proche, et symétriquement le jeu de plaques de serrage 151' entre la paroi latérale 514 et l'autre disque 6. Les plaques 151, 151' sont reliées respectivement aux disques 6 par leur montage à coulissement sur les tiges de liaison 7, grâce à des trous de passage 7' opérés dans lesdites plaques et coopérant avec les tiges de liaison 7. Les tiges de liaison 7 permettent de guider le mouvement des plaques de serrage 151, 151' qui sont actionnées par des vérins de manoeuvre 152, 152' permettant le déplacement axial desdites plaques de serrage vers les préhenseurs 5.

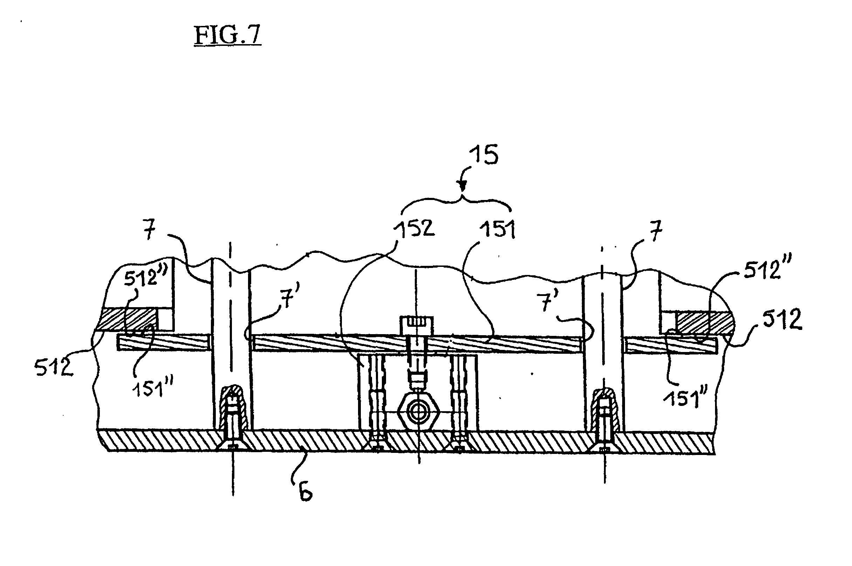

Chacune des parois latérales 512, 514 des préhenseurs 5 porte extérieurement au moins une surface de contact avec une plaque de serrage. En particulier, comme représenté aux figures 3 et 7, chacune des parois latérales 512 (514) des préhenseurs 5 porte extérieurement respectivement deux surfaces 512" (514") de contact avec deux plaques de serrage 151 (151') consécutives, les deux surfaces de contact 512" (514") d'une même paroi 512 (514) étant situées à chacune des extrémités radialement opposées de ladite paroi. Chaque plaque de serrage 151 (151') porte également, intérieurement par rapport à l'anneau 1, deux surfaces de contact 151" (151'' ') avec deux surfaces de contact 512" (514") portées respectivement par deux préhenseurs 5 consécutifs. Pour obtenir de plus grandes surfaces de contact, les plaques 151, 151' se présentent sous forme de portions de disque annulaire. On réalise ainsi un blocage par serrage des préhenseurs 5.

Cette disposition permet d'une part de laisser accessible pour les moyens de guidage 12, qui sont donc disposés parallèlement aux plaques de serrage 151, 151', la partie centrale extérieure des parois latérales 512 et 514, et d'autre part d'assurer une rigidité circonférentielle supplémentaire. Il est alors avantageux pour des raisons de symétrie et d'efficacité de disposer deux ressorts 13 sur chaque paroi de part et d'autre des moyens de guidage 12, tels qu'ils apparaissent sur les figures 3 et 4.

Ainsi ce système de blocage en position et de maintien des préhenseurs 5 est fixe radialement et peut agir quelle que soit la position radiale desdits préhenseurs. Bien entendu, à cette fin il est nécessaire que les plaques de serrage 151, 151' soient en contact avec les parois latérales 512 et 514 des préhenseurs 5 même lorsque lesdits préhenseurs sont en position de course maximale. Il est donc intéressant que les plaques de serrage 151, 151' soient situées à proximité du diamètre intérieur des disques 6 sans le dépasser, afin de ne pas augmenter l'encombrement radial. Les diamètres intérieurs et extérieurs des disques 6 sont choisis avantageusement de façon à correspondre sensiblement à l'encombrement radial des préhenseurs 5 en position de repos.

Il faut également que la hauteur des parois 512, 514 soit supérieure à la course maximale des préhenseurs 5. Dans ce cas, même en position de déplacement maximal des préhenseurs, il restera une partie des parois latérales 512 et 514 dans le volume intérieur au disque 6 et donc les surfaces de contact 512" et 514" avec les plaques de serrage seront non nulles. Ces dimensions peuvent être optimisées afin d'obtenir des surfaces de contact permettant un blocage efficace.

Dans ce qui suit, on décrira succinctement le fonctionnement de l'anneau de transfert 1.

L'anneau de transfert 1 est avancé vers la forme 2 jusqu'à ce qu'il soit positionné correctement autour de ladite forme. Dans cette position, les vérins d'actionnement 8 sont en repos, comme le montre la figure 6, et les préhenseurs sont alors écartés au maximum les uns des autres. Les plaques de serrage 151, 151' sont également écartées par rapport auxdits préhenseurs.

L'alimentation en air des vérins 8 est alors mise en route et les chambres respectives de ces vérins 8 commencent à se déployer. Ce déploiement entraîne le déplacement radial vers l'intérieur de l'anneau 1 du corps 51 de chaque préhenseur 5, les parois latérales 512 et 514 glissant respectivement grâce aux moyens de guidage 12. On décrira ce déplacement pour une des parois, 512, d'un préhenseur 5, sachant que les moyens de guidage agissent symétriquement et de façon identique pour les deux parois.

Dans un premier temps, le rail 123 se déplace en coulissant sur le patin 124 fixé rigidement sur un des disques 6, permettant ainsi l'avancement de la paroi 512. Puis, lorsque le patin 124 est en butée sur une extrémité du rail 123, le mouvement se poursuit grâce au coulissement du patin 121 fixé rigidement sur la paroi 512 dans le rail 122 accolé au rail 124. La position d'arrêt de chaque préhenseur 5 est déterminée par le contact de son élément de prise 52 avec la ceinture à saisir. Bien entendu, la position de butée du patin 121 dans le rail 122 définit la course maximale du préhenseur 5.

Chaque préhenseur 5 va donc se déplacer indépendamment des autres jusqu'à son contact avec la ceinture. Ainsi, lorsque tous les préhenseurs 5 seront au contact de la ceinture, ils ne se seront pas nécessairement déplacés de la même course, en fonction de la précision du centrage de l'anneau de transfert 1 par rapport à la forme 2 ou d'éventuels défauts de la ceinture elle-même.

Les préhenseurs 5 étant tous en contact avec la ceinture, on actionne les vérins de manoeuvre 152, 152' qui vont mettre en mouvement les plaques de serrage 151, 151'. Ces dernières se rapprochent axialement des parois latérales 512 des préhenseurs 5 pour les plaques de serrage 151, et des parois latérales 514 pour les plaques de serrage 151', jusqu'au contact. Les deux surfaces de contact 151", (151"') de chaque plaque de serrage 151 (151') coopèrent alors avec les surfaces de contact 512" (514") correspondantes de deux préhenseurs 5 consécutifs pour réaliser ainsi le blocage par serrage axial desdits préhenseurs, comme on le voit sur la figure 7.

La forme 2 est ensuite dégonflée et la ceinture, tenue désormais par l'anneau de transfert 1, est transportée jusqu'au tambour 3.

L'anneau de transfert 1 fonctionne pour la pose de la ceinture sur le tambour 3 à l'inverse de ce qui se passe pour la prise inverse, c'est-à-dire :
lorsque l'anneau de transfert 1 est positionné au dessus du tambour 3, les vérins de manoeuvre 152, 152' sont actionnés afin d'écarter les plaques de serrage 151, 151' des préhenseurs 5, rendant à ces derniers leur liberté de mouvement radial. L'alimentation en air des vérins d'actionnement 8 des préhenseurs 5 ayant été interrompue, lesdits préhenseurs 5 reviennent à leur position de repos grâce aux ressorts de rappel 13.

Leur mouvement de retour guidé comme précédemment grâce aux moyens 12, s'effectue jusqu'à une limite de course constituée par la butée des épaulements 513' et 515' de chaque préhenseur 5 avec la zone centrale 91 du flasque 9 correspondant.

## Revendications

1. Anneau de transfert (1) d'une enveloppe de pneumatique ou d'une ceinture d'enveloppe de pneumatique, comportant des préhenseurs (5) répartis le long de sa circonférence, déplaçables radialement pour entrer en contact avec ladite enveloppe ou ceinture, et comportant des moyens (8) pour commander le déplacement radial desdits préhenseurs et des moyens d'immobilisation (15) des préhenseurs (5) par blocage de ces derniers perpendiculairement à leur déplacement radial, **caractérisé en ce que** les moyens d'immobilisation agissent directement sur les préhenseurs (5).

2. Anneau de transfert selon la revendication 1, **caractérisé par le fait que** les moyens d'immobilisation (15) comprennent des éléments de serrage (151, 151') des préhenseurs (5) répartis en deux jeux circonférentiels, latéralement de part et d'autre des préhenseurs (5), les éléments (151, 151') des deux jeux se faisant face, et **par le fait que** chaque élément de serrage (151, 151') est déplaçable vers un préhenseur (5) perpendiculairement au déplacement radial de ce dernier.

3. Anneau selon la revendication 2, **caractérisé par le fait que** les éléments de serrage (151, 151') sont constitués par des plaques de serrage.

4. Anneau de transfert selon la revendication 3, **caractérisé par le fait que** les plaques de serrage (151) sont déplaçables axialement vers les préhenseurs (5).

5. Anneau de transfert selon la revendication 4, **caractérisé par le fait que** les préhenseurs (5) comportent deux parois latérales (512, 514) opposées, parallèles aux plaques de serrage (151, 151') et qui porte extérieurement respectivement au moins une surface de contact (512", 514") avec une plaque de serrage (151).

6. Anneau de transfert selon la revendication 5, **caractérisé par le fait que** chacune des deux parois (512, 514) porte deux surfaces de contact (512", 514") avec deux plaques de serrage consécutives (151, 151'), situées à chacune des extrémités radialement opposées de ladite paroi.

7. Anneau de transfert selon l'une quelconque des revendications 5 ou 6, **caractérisé par le fait que** chaque plaque de serrage (151, 151') porte deux surfaces de contact (151", 151"') avec des surfaces de contact (512", 514") portées par deux préhenseurs (5) consécutifs.

8. Anneau de transfert selon l'une quelconque des revendications 1 à 7, **caractérisé par le fait que** la structure de base de l'anneau de transfert (1) est constituée par deux disques (6) annulaires, identiques et parallèles, définissant les parois latérales dudit anneau, solidarisés l'un à l'autre par des tiges de jonction (7) espacées régulièrement sur leur circonférence et dont chaque extrémité est fixée sur l'un des disques, et en ce que les préhenseurs (5) et les moyens d'immobilisation (15) sont montés sur les disques (6) de l'anneau de transfert (1).

9. Anneau de transfert selon la revendication 8 et l'une quelconque des revendications 3 à 7, **caractérisé par le fait que** les plaques de serrage (151, 151') sont montées à coulissement sur les tiges de jonction (7), entre les préhenseurs (5) et les disques (6).

10. Anneau de transfert selon la revendication 9, **caractérisé par le fait que** la liaison entre une plaque de serrage (151, 151') et le disque (6) correspondant est réalisée par un vérin de manoeuvre (152, 152') de ladite plaque.

11. Anneau de transfert selon l'une quelconque des revendications 1 à 10, **caractérisé par le fait que** chaque préhenseur (5) possède un moyen d'actionnement propre (8) autorisant un déplacement. radial de course quelconque indépendamment pour chaque préhenseur.

12. Anneau de transfert selon la revendication 11, **caractérisé par le fait que** les moyens d'actionnement propres (8) des préhenseurs sont constitués par des vérins de pression de fonctionnement faible.

13. Anneau de transfert selon l'une quelconque des revendications 11 ou 12, **caractérisé par le fait que** les vérins d'actionnement (8) sont des vérins à soufflet.

14. Anneau de transfert selon la revendication 11, **caractérisé par le fait que** chaque préhenseur (5) comprend un corps creux (51), déplaçable radialement, possédant une paroi de fond (511) portant extérieurement un élément de prise de la ceinture ou de l'enveloppe, et que ladite paroi de fond (511) est reliée intérieurement par un vérin d'actionnement (8) du préhenseur à un flasque (9) fixé sur l'anneau de transfert (1).

15. Anneau de transfert selon la revendication 14 et la revendication 3, **caractérisé par le fait que** le corps (51) de chaque préhenseur (5) comporte deux parois latérales opposées (512, 514), parallèles aux plaques de serrage (151, 151').

16. Anneau de transfert selon la revendication 15, **caractérisé par le fait que** la hauteur des parois latérales (512, 514) est supérieure à la course maximale des préhenseurs (5).

17. Anneau de transfert selon l'une quelconque des revendications 1 à 16, **caractérisé par le fait qu'**il comprend des moyens de guidage (12) des préhenseurs (5), disposés latéralement par rapport auxdits préhenseurs.

18. Anneau de transfert selon la revendication 17 et la revendication 3, **caractérisé par le fait que** les moyens de guidage (12) sont disposés parallèlement aux plaques de serrage (151, 151').

19. Anneau de transfert selon l'une quelconque des revendications 17 ou 18, **caractérisé par le fait que** les moyens de guidage (12) des préhenseurs (5) comprennent, pour chaque préhenseur (5), au moins deux rails (122, 123) accolés par leur paroi de fond respective, à l'intérieur desquels coulissent respectivement un premier patin (121) fixé rigidement sur ledit préhenseur (5) et un second patin (124) fixé rigidement sur l'anneau de transfert (1).

20. Anneau de transfert selon les revendications 18 et 19, **caractérisé par le fait que** les préhenseurs (5) comportent deux parois latérales (512, 514) opposées, parallèles aux plaques de serrage, et sur chacune desquelles est fixé respectivement le premier patin (121).

## Claims

1. A transfer ring (1) of a tyre or tyre belt, comprising grippers (5) distributed along its circumference, which are displaceable radially so as to come into contact with said tyre or belt, and comprising means (8) for controlling the radial displacement of said grippers and means (15) for immobilising the grippers (5) by blocking the latter perpendicular to their radial displacement, **characterised in that** the immobilising means act directly on the grippers (5).

2. A transfer ring according to Claim 1, **characterised by** the fact that the immobilising means (15) comprise clamping elements (151, 151') for the grippers (5), distributed in two circumferential sets laterally on both sides of the grippers (5), the elements (151, 151') of the two sets facing each other, and by the fact that each clamping element (151, 151') is displaceable towards a gripper (5) perpendicular to the radial displacement of the latter.

3. A ring according to Claim 2, **characterised by** the fact that the clamping elements (151, 151') are formed by clamping plates.

4. A transfer ring according to Claim 3, **characterised by** the fact that the clamping plates (151) are displaceable axially towards the grippers (5).

5. A transfer ring according to Claim 4, **characterised by** the fact that the grippers (5) comprise two opposing lateral walls (512, 514) parallel to the clamping plates (151, 151'), which bear on the outside respectively at least one surface of contact (512", 514") with a clamping plate (151).

6. A transfer ring according to Claim 5, **characterised by** the fact that each of the two walls (512, 514) has two surfaces of contact (512", 514") with two consecutive clamping plates (151, 151') located at each of the radially opposing ends of said wall.

7. A transfer ring according to any one of Claims 5 or 6, **characterised by** the fact that each clamping plate (151, 151') has two surfaces of contact (151", 151"') with contact surfaces (512", 514") borne two consecutive grippers (5).

8. A transfer ring according to any one of Claims 1 to 7, **characterised by** the fact that the base structure of the transfer ring (1) is formed by two identical, parallel annular discs (6) defining the side walls of said ring, held together by connecting rods (7) spaced uniformly on their circumference and each end of which is fastened on one of the discs, and in that the grippers (5) and the immobilising means (15) are mounted on the discs (6) of the transfer ring (1).

9. A transfer ring according to Claim 8 and any one of Claims 3 to 7, **characterised by** the fact that the clamping plates (151, 151') are slidably mounted on the connecting rods (7) between the grippers (5) and the discs (6).

10. A transfer ring according to Claim 9, **characterised by** the fact that the connection between a clamping plate (151, 151') and the corresponding disc (6) is provided by an actuator (152, 152') for manoeuvring said plate.

11. A transfer ring according to any one of Claims 1 to 10, **characterised by** the fact that each gripper (5) has its own actuating means (8) which imparts a radial displacement of stroke that is independent for each gripper.

12. A transfer ring according to Claim 11, **characterised by** the fact that the own actuating means (8) for the grippers are actuators of low operating pressure.

13. A transfer ring according to any one of Claims 11 or 12, **characterised by** the fact that the actuating means (8) are bellows actuators.

14. A transfer ring according to Claim 11, **characterised by** the fact that each gripper (5) comprises a radially displaceable hollow body (51) having an end wall (511) bearing on the outside an element for the grasping the belt or tyre, and in that said end wall (511) is connected on the inside by an actuating means (8) of the gripper to an end plate (9) fastened on the transfer ring (1).

15. A transfer ring according to Claim 14 and Claim 3, **characterised by** the fact that the body (51) of each gripper (5) has two opposing side walls (512, 514) parallel to the clamping plates (151, 151').

16. A transfer ring according to Claim 15, **characterised by** the fact that the height of the side walls (512, 514) is greater than the maximum stroke of the grippers (5).

17. A transfer ring according to any one of Claims 1 to 16, **characterised by** the fact that it comprises guide means (12) for the grippers (5), arranged laterally with respect to said grippers.

18. A transfer ring according to Claim 17 and Claim 3, **characterised by** the fact that the guide means (12) are arranged parallel to the clamping plates (151, 151').

19. A transfer ring according to any one of Claims 17 or 18, **characterised by** the fact that the guide means (12) for the grippers (5) include, for each gripper (5), at lest two rails (122, 123) arranged with their respective end walls side by side, within which there slide respectively a first shoe (121) rigidly fastened on said gripper (5) and a second shoe (124) rigidly fastened on the transfer ring (1).

20. A transfer ring according to Claims 18 and 19, **characterised by** the fact that the grippers (5) have two opposing side walls (512, 514) parallel to the clamping plates, on each of which the first shoe (121) respectively is fastened.

## Patentansprüche

1. Umsetzring (1) für einen Reifenmantel oder einen Gürtel eines Reifenmantels, mit Greifern (5), die längs seines Umfangs verteilt sind und radial versetzbar sind, um mit dem genannten Mantel oder Gürtel in Berührung zu treten, und mit Mitteln (8), um die radiale Versetzung der genannten Greifer zu steuern, sowie Mitteln (15) zur unbeweglichen Festlegung der Greifer (5) durch deren Blockierung senkrecht zu ihrer radialen Verlagerung, **dadurch gekennzeichnet, daß** die Mittel zur unbeweglichen Festlegung unmittelbar auf die Greifer (5) einwirken.

2. Umsetzring nach Anspruch 1, **dadurch gekennzeichnet, daß** die Mittel (15) zur unbeweglichen Festlegung Spannelemente (151, 151') für die Greifer (5) aufweisen, die in zwei Umfangsgarnituren seitlich beiderseits der Greifer (5) verteilt sind, wobei die Elemente (151, 151') der beiden Garnituren einander gegenüberliegen, und daß jedes Spannelement (151, 151') zu einem Greifer (5) hin senkrecht zu dessen radialer Verlagerung verlagerbar ist.

3. Ring nach Anspruch 2, **dadurch gekennzeichnet, daß** die Spannelemente (151, 151') von Spannplatten gebildet sind.

4. Umsetzring nach Anspruch 3, **dadurch gekennzeichnet, daß** die Spannplatten (151) axial auf die Greifer (5) zu verlagerbar sind.

5. Umsetzring nach Anspruch 4, **dadurch gekennzeichnet, daß** die Greifer (5) zwei gegenüberliegende Seitenwände (512, 514) aufweisen, die parallel zu den Spannplatten (151, 151') verlaufen, und der außen jeweils mindestens eine Fläche (512", 514") zur Berührung mit einer Spannplatte (151) trägt.

6. Umsetzring nach Anspruch 5, **dadurch gekennzeichnet, daß** jede der beiden Wände (512, 514) zwei Berührungsflächen (512", 514") mit zwei aufeinanderfolgenden Spannplatten (151, 151') trägt, die an jedem der radial gegenüberliegenden Enden der genannten Wand gelegen sind.

7. Umsetzring nach irgendeinem der Ansprüche 5 oder 6, **dadurch gekennzeichnet, daß** jede Spannplatte (151, 151') zwei Berührungsflächen (151", 151" ') trägt, wobei die Berührungsflächen (512", 514") durch zwei aufeinanderfolgende Greifer (5) getragen sind.

8. Umsetzring nach irgendeinem der Ansprüche 1 bis 7, **dadurch gekennzeichnet, daß** der Aufbau der Basis des Umsetzringes (1) von zwei ringförmigen Scheiben (6) gebildet ist, die identisch und parallel sind, die seitlichen Wände des genannten Ringes bilden und miteinander durch Verbindungsstangen (7) zusammengefügt sind, die regelmäßig über ihren Umfang verteilt sind und von denen jedes Ende auf einer der Scheiben befestigt ist, und daß die Greifer (5) und die Mittel zur unbeweglichen Festlegung (15) auf den Scheiben (6) des Umsetzringes (1) angebracht sind.

9. Umsetzring nach Anspruch 8 und irgendeinem der Ansprüche 3 bis 7, **dadurch gekennzeichnet, daß** die Spannplatten (151, 151') zur Gleitbewegung auf den Verbindungsstangen (7) zwischen den Greifern (5) und den Scheiben (6) angebracht sind.

10. Umsetzring nach Anspruch 9, **dadurch gekennzeichnet, daß** die Verbindung zwischen einer Spannplatte (151, 151') und der entsprechenden Scheibe (6) durch einen Manövrierkolben (152, 152') der genannten Platte gebildet ist.

11. Umsetzring nach irgendeinem der Ansprüche 1 bis 10, **dadurch gekennzeichnet, daß** jeder Greifer (5) ein eigenes Betätigungsmittel (8) aufweist, das für jeden Greifer unabhängig eine radiale Versetzung in irgendeiner Bewegungsbahn ermöglicht.

12. Umsetzring nach Anspruch 11, **dadurch gekennzeichnet, daß** die eigenen Betätigungsmittel (8) der Greifer Druckzylinder mit schwacher Wirkungsweise sind.

13. Umsetzring nach irgendeinem der Ansprüche 11 oder 12, **dadurch gekennzeichnet, daß** die Betätigungszylinder (8) Balgenzylinder bzw. Balgen-Hubeinrichtungen sind.

14. Umsetzring nach Anspruch 11, **dadurch gekennzeichnet, daß** jeder Greifer (5) einen hohlen Körper (51) aufweist, der radial versetzbar ist und eine Bodenwand (511) aufweist, die auf der Außenseite ein Element zum Aufnehmen des Gürtels oder des Mantels besitzt, und daß die genannte Bodenwand (511) auf der Innenseite durch einen Betätigungszylinder (8) des Greifers mit einem Flansch (9) verbunden ist, der auf dem Umsetzring (1) befestigt ist.

15. Umsetzring nach Anspruch 14 und Anspruch 3, **dadurch gekennzeichnet, daß** der Körper (51) eines jeden Greifers (5) zwei gegenüberliegende, seitliche Wände (512, 514) aufweist, die zu den Spannplatten (151, 151') parallel sind.

16. Umsetzring nach Anspruch 15, **dadurch gekennzeichnet, daß** die Höhe der seitlichen Wände (512, 514) größer ist als der maximale Bewegungsweg der Greifer (5).

17. Umsetzring nach irgendeinem der Ansprüche 1 bis 16, **dadurch gekennzeichnet, daß** er Führungsmittel (12) für die Greifer (5) aufweist, die bezüglich der Greifer seitlich angeordnet sind.

18. Umsetzring nach Anspruch 17 und Anspruch 3, **dadurch gekennzeichnet, daß** die Führungsmittel (12) parallel zu den Spannplatten (151, 151') angeordnet sind.

19. Umsetzring nach irgendeinem der Ansprüche 17 oder 18, **dadurch gekennzeichnet, daß** die Führungsmittel (12) der Greifer (5) für jeden Greifer (5) mindestens zwei Schienen (122, 123) aufweisen, die durch ihre jeweilige Bodenwand verbunden sind, wobei im Inneren dieser jeweils einer erste Kufe (121), die starr am genannten Greifer (5) befestigt ist, und einer zweite Kufe (124) gleiten, die starr am Umsetzring (1) befestigt ist.

20. Umsetzring nach den Ansprüchen 18 und 19, **dadurch gekennzeichnet, daß** die Greifer (5) zwei gegenüberliegende, seitliche Wände (512, 514) aufweisen, die parallel zu den Spannplatten sind, und daß auf jeder dieser jeweils die erste Kufe (121) befestigt ist.
